# EUROPÄISCHE PATENTSCHRIFT

(11) **EP 1 031 806 B1**
(45) Veröffentlichungstag und Bekanntmachung des Hinweises auf die Patenterteilung: **29.01.2003**
(21) Anmeldenummer: 00102546.9
(22) Anmeldetag: 07.02.2000
(51) Int. Cl.: F28D 7/06, F28F 19/00, F28F 9/16

(54) **Wärmetauscher und Verfahren zu seiner Herstellung**
Heat exchanger and method for manufacturing same
Echangeur de chaleur et sa méthode de fabrication

(30) Priorität: 23.02.1999 DE 19907871
(43) Veröffentlichungstag der Anmeldung: 30.08.2000
(73) Patentinhaber: EHW Thale Email GmbH, 06502 Thale (DE)
(72) Erfinder: Kohler, Werner G., Dr. Ing., 38729 Lutter (DE); Twardy, Frank, Dipl.-Ing., 06502 Timmenrode (DE); Schefter, Bernd, 06502 Thale (DE)
(74) Vertreter: Einsel, Martin, Dipl.-Phys.

(56) Entgegenhaltungen:
- DE-A- 19 503 999
- DE-A- 19 610 501
- DE-C- 855 569

## Beschreibung

Die Erfindung betrifft einen Wärmetauscher mit einem ersten Behälterbereich für ein zu kühlendes oder zu erwärmendes insbesondere chemisch aggressives Medium, wobei in diesem ersten Behälterbereich eine Anzahl rohrförmiger aus einem emaillierten Metall bestehender Leitungen verlaufen, deren innere Hohlräume einen zweiten Behälterbereich für ein zweites kühlendes und/oder erhitzendes Medium bilden und welche Leitungen durch Öffnungen eines Rohrbodens aus dem ersten Behälterbereich heraus und in einen oder mehrere Kammern mit dem zweiten, kühlenden oder erhitzenden Medium führen. Die Erfindung betrifft außerdem ein Verfahren zur Herstellung eines Wärmetauschers.

Ein derartiger Wärmetauscher ist zum Beispiel aus der DE-A1-19610501 bekannt.

Wärmetauscher werden für eine Vielzahl von Anwendungsfällen benötigt; dabei stellen Wärmetauscher für chemisch aggressive Medien, z. B. Säuren oder auch Gase, einen besonders anspruchsvollen Sonderfall dar. Es geht darum, daß ein solches Medium beispielsweise während seiner Reaktion oder Lagerung gekühlt oder aber auch erhitzt werden soll, und zwar möglichst effektiv und schnell. Hierfür bieten sich Wärmetauscher an sich natürlich an. Das üblicherweise kühlende und Reaktionswärme abführende (oder in bestimmten Anwendungsfällen auch erhitzende) Medium, insbesondere Wasser, wird dabei durch Leitungen geführt, welche außen von dem aggressiven chemischen Medium umgeben sind. Durch die Leitungswand hindurch findet der Wärmeaustausch statt. Diese Leitungen müssen aus einem hochresistenten Werkstoff bestehen oder auf andere Weise gegen das chemisch aggressive Medium geschützt sein. Ein Kontakt der Medien untereinander muß ebenso vermieden werden wie ein Herausdiffundieren des chemisch aggressiven Mediums aus dem Wärmetauscher an unbeabsichtigten Stellen. Dabei ist eine besondere Problemzone der Austritt der Leitungen aus dem Volumenbereich, also dem oben angegebenen ersten Behälterbereich, in dem sich das chemisch aggressive Medium befindet.

Bei bekannten Wärmetauschern zu diesem Zweck bestehen beispielsweise sowohl die Leitungen als auch der entsprechende Rohrboden, durch die die Leitung herausgeführt wird, aus Tantal. Dies ist natürlich insbesondere kostenmäßig sehr aufwendig.

Alternativ werden emaillierte Stahlrohre verwendet, die durch einen Rohrboden geführt werden, wobei die Durchführungen mit entsprechenden Dichtungen, beispielsweise Dichtungsringen, abgesichert werden. Dies ist einerseits aufwendig und andererseits auch ein nur unvollständiger Schutz, denn diese Dichtungen sind ihrerseits anfällig und müssen aus einem anderen Material als Stahl gefertigt werden, meist aus Kunststoff.

Es wäre höchst gefährlich, wenn die chemisch aggressiven Medien durch diese Durchführungen in irgendeiner Form hindurchdiffundieren könnten, da sie dann in das andere kühlende oder erhitzende Medium hineingelangen könnten, somit auf die ungeschützten Innenseiten der Leitungen gelangen würden und dort erhebliche Schäden anrichten könnten. Außerdem kann auch schon innerhalb des Bereiches der Durchführungen oder in den danach anschließenden Bereichen der Kammer Korrosion eintreten. Dies führt jeweils zu deutlich verkürzten Standzeiten des Wärmetauschers.

Es ist nicht möglich, wie in anderen Gebieten der Technik vielleicht naheliegend, Stahlrohre in dem Durchführungsbereich mit dem Rohrboden zu verschweißen. Diese Schweißnähte wären nämlich ihrerseits dem aggressiven Medium ausgesetzt und könnten in diesem Bereich nicht erneut emailliert oder anderweitig geschützt werden, da hierfür die geometrische Zugänglichkeit fehlt.

In der DE 196 10 501 A1 wird ein Rohrboden mit Durchführungen für U-Rohre oder einseitig verschlossene Rohre vorgeschlagen, der technisch allerdings nicht realisiert wurde und dessen Vorschläge auch nicht praktischen Anforderungen Stand halten würde. Zwar wird neben anderen Materialien auch der Einsatz emaillierter Rohre vorgeschlagen, bei Beanspruchung wäre allerdings mit Emailleabplatzungen zu rechnen.

In der nachveröffentlichten DE 197 35 630 A1 wird eine weitere Konzeption vorgeschlagen, die praktikabler ist. Ihr gegenüber scheinen noch Verbesserungen möglich.

Eine Aufgabe der Erfindung ist es demgegenüber, einen Wärmetauscher mit einer verbesserten Konzeption vorzuschlagen. Eine weitere besteht darin, ein Verfahren zu seiner Herstellung vorzuschlagen.

Diese erstgenannte Aufgabe wird bei einem gattungsgemäßen Wärmetauscher dadurch gelöst, daß die Leitungen innerhalb des ersten Behälterbereiches in ihren äußeren Wandungen Sicken aufweisen und die emaillierte Außenfläche der Leitungen und die Innenflächen der Öffnungen dichtungsfrei und leckfrei im Preßsitz aufeinanderliegen.

Bei einem Verfahren zu seiner Herstellung werden die Leitungen vor dem Emaillieren und Einsetzen mit Sicken in dem Bereich versehen, der nach dem Einsetzen im ersten Behälterbereich angeordnet ist.

Mit einer derartigen Konstruktion oder solchen Verfahren wird das Problem überraschend gelöst: Eine Durchführung, bei der die emaillierten Beschichtungen direkt aufeinandersitzen, lecksicher sind und im Preßsitz aufeinandergefügt sind und die außerdem dichtungsfreie Öffnung erfüllt alle Forderungen. Es gibt keine Bestandteile mehr, die dem korrosiven Medium ausgesetzt sind und dieses kann auch nicht hindurchdringen.

Zugleich wird ein Abplatzen der Emaillierung verhindert; es entsteht auch ein gegen thermische und mechanische Beanspruchung sehr resistenter Wärmetauscher.

Eine solche Konzeption wäre bisher von allen Fachleuten für unmöglich gehalten worden; sie haben es auch nie in Betracht gezogen. Dies liegt insbesondere an den komplizierten Formen der Leitungsführungen in diesen Wärmetauschern, die gebogen sind und nicht separat emailliert werden können und auch praktisch aufgrund der geometrischen Gegebenheiten keine Möglichkeit geben, im Preßsitz überhaupt eingefügt zu werden. Außerdem besteht für die Fachwelt das Problem, daß Email mechanisch nicht mit so großer Fertigungsgenauigkeit bearbeitet werden kann, daß eine flüssigkeits- und gasdichte Verbindung entsteht.

Bevorzugt werden bei dem Verfahren
- Leitungen hergestellt, indem kurze, gerade Abschnitte vorbereitet und emailliert werden, diese kurzen, geraden Abschnitte werden über ein oder mehrere Verbindungsabschnitte verbunden und verschweißt und die Verbindungsstellen lokal nachemailliert,
- oder Leitungen hergestellt werden, indem komplette emaillierte U-Rohre an den geraden Enden bearbeitet und durch Preßsitz mit den Öffnungen verbunden werden,
- die Leitungen oder zumindest ihre kurzen geraden Abschnitte kryoskopisch unterkühlt und mit ihren kurzen, geraden Abschnitten in die Öffnungen in der Behälterwandung eingesetzt,
- anschließend durch Erwärmung eine Ausdehnung und dadurch ein Preßsitz der kurzen geraden Abschnitte in den Öffnungen entstehen.

Im Gegensatz zum Vorurteil der Fachwelt ist dies jedoch erfindungsgemäß möglich.

Dazu wird bevorzugt eine Erzeugung des Preßsitzes durch kryoskopisch Schrumpfung eingesetzt. Dies hat den besonderen Vorzug, daß eine präzise Fügung der Teile möglich ist. Wie sich gezeigt hat, ist es mit einer solchen Konzeption ohne weiteres möglich, den standardisierten Heliumlecktest zu bestehen.

Besonders bevorzugt ist es, wenn außerdem auch der Rohrboden aus emailliertem Metall besteht, dies gilt insbesondere für die Innenflächen der Öffnungen, durch die die Leitungen hindurchführen.

Weiter ist es von besonderem Vorteil, wenn eine Emailleschicht von nur 500 bis 1.000 µm, insbesondere bis 600 µm Dicke verwendet wird, die lediglich im Bereich der Durchführung, also im Bereich des Preßsitzes, etwas dicker ausgebildet ist. Durch eine sehr dünne Emailleschicht kann der Wärmedurchgangskoeffizient k (W/m²K) an den Leitungsrohren reduziert werden, was die Funktionstüchtigkeit eines Wärmetauschers naturgemäß sehr fördert.

Ferner ist es besonders bevorzugt, wenn die Leitungen jeweils aus einem Rohrabschnitt bestehen, der den Bereich innerhalb und benachbart zur Durchführung durch die Öffnung bildet sowie auch durch weitere, davon separat gefertigte Rohrabschnitte. Dadurch kann es ermöglicht werden, den einen relativ kurzen Rohrabschnitt für die eigentliche Durchführung hochpräzise und mit äußerster Präzision auch hinsichtlich zu vermeidender Winkelabweichungen zu fertigen, was für einen genauen Preßsitz von großem Vorteil ist.

Dabei ist insbesondere auch zu berücksichtigen, daß Leitungen in Wärmetauschern des hier bevorzugten interessierenden Typs zwei gerade, parallele Abschnitte aufweisen, die durch zwei Öffnungen in einem gemeinsamen Rohrboden hindurchführen sollen und die im Behälterinneren in dem Bereich genau entgegengesetzt zum Rohrboden mit den Öffnungen mittels eines um 180° gebogenen Abschnittes verbunden sind. Es ist für die Durchführung durch den Rohrboden daher erforderlich, dieses Gesamtelement der Leitung genau parallel so durch den Boden hindurchzuführen, daß beide Leitungsaußenseiten in den Öffnungen im Preßsitz bei der kryoskopischen Schrumpfung genauestens parallel verlaufen, da schon kleine Verkantungen zu Problemen führen könnten.

An die kurzen geraden Abschnitte kann dann erfindungsgemäß der restliche längere Teil der Leitung angeschweißt und die Verbindungsbereiche jeweils lokal erneut emailliert werden. Diese längeren Teile sind weniger kritisch und müssen nur mit normaler Genauigkeit gefertigt werden.

Auch wird es möglich, die Fertigung der Wärmetauscher zu standardisieren. Für jeden Wärmetauscher werden nämlich Leitungen verschiedener Länge eingesetzt, die geometrisch jeweils einander nicht störend übereinander verlaufen; die gebogenen Verbindungsabschnitte haben dabei verschiedene Längen, die längeren, geraden Abschnitte können in Endlosverfahren, wie beispielsweise in der DE 195 03 999 A1 beschrieben, angefertigt und in den benötigten Längen abgeschnitten und zusammengesetzt werden.

Durch die Erfindung gelingt es, einen emaillierten U-Bündel-Wärmeübertrager aus außen emaillierten U-Rohren mit Rohrteilungen, wie sie auch bei konventionellen Wärmeübertragern üblich sind, zu konstruieren. Damit steht erstmals ein kompakter, emaillierter Wärmeübertrager zur Verfügung, der sowohl als Verdampfer und Kondensator als auch für den Wärmeübergang flüssig/flüssig geeignet ist. Die Rohrteilungen werden dank der neuen dichtungslosen Rohr-Rohrbodenverbindungen möglich. Die Emaildicke der emaillierten U-Rohre beträgt 0,5 bis 0,8 mm. Aufgrund dessen kann die Wärmeübertragungsfläche um etwa 40 % kleiner ausfallen als bei herkömmlichen emaillierten Apparaten, deren Emailschicht etwa 1,4 bis 1,6 mm dick ist. Der Wärmeübertragungskoeffizient des emaillierten Wärmeübertragers liegt bei etwa 800 W/m²K. Vorgesehen sind Manteldurchmesser zwischen DN 200 und 600, wobei Wärmeübertragungsflächen pro Meter Bündellänge von 1,14 bis 13,7 m² realisiert werden können. Die Wärmeübertrager sind bei Temperaturen bis etwa 230° C und mehr einsetzbar. Je nach Anlagensituation kann der Wärmeübertrager vertikal und horizontal eingebaut werden.

Erfindungsgemäß können statt der U-förmigen Wärmeübertrager auch sogenannte "Heat Pipes" eingesetzt werden, das sind einseitig verschlossene Geraderohr-Wärmeübertrager mit Leitungen mit doppelwandigen Rohren, bei denen die Flüssigkeit innen in der einen Richtung strömt, am Ende umgelenkt wird und dann in dem Ringraum zwischen der Doppelwand zurückströmt.

Durch die Erfindung entsteht ein Wärmetauscher, der im Bereich des Überganges Rohr/Rohrboden zur Reduzierung von Spannungsspitzen im Übergangsbereich ein solches Spannungsgefälle in der Emailschicht besitzt, daß die maximal zulässige Zug-/Druckspannung durch die kyroskopische Verbindung einerseits und auftretende thermische Beanspruchung andererseits im Einsatzfall kompensiert wird.

Die Gestaltung und Ausführung sowie die Technologie der Emaillierung für diese gefährdete Stelle ist so gewählt, daß die Radien eamilliergerecht sind und die auftretenden Druck/Zugspannungen weit unter den zulässigen Werten für emaillierte Erzeugnisse bleiben.

Die Ausführung der Verbindung ist so gestaltet, daß eine dauerelastische Verbindung zwischen Rohr- und Rohrboden unter Zugrundelegung des ebenen Spannungszustandes im Innen- und Außenteil des Rohres entsteht.

Das gewählte Übermaß Rohr/Rohrboden und die dadurch ausgelöste Verformung erzeugt einen räumlichen Spannungszustand, welcher eine sichere Verbindung gegen selbständiges Ausschrumpfen einerseits (unter hoher Druckbelastung im Innenrohr), absolute gasdichte Verbindung andererseits mit (Helium-Lecktest bis 10⁻⁴ bar) dauerhaft gewährleistet und Spannungen im Email im kritischen Übergangsbereich verhindert. Die Flächenpressung liegt immer weit unter dem zulässigen Bereich.

Der auftretende Übermaßverlust Δ **U** und das eingestellte Haftmaß **Z** stellt eine sichere dauerhafte gasdichte Verbindung dar.

Die zu verbindenden Emailflächen werden mit einem Rauheitswert bzw. Rautiefe Rₜ hergestellt, welche nach erfolgter Einbindung selbstständige Füge- und Lösevorgänge unter wechselnder thermischer Beanspruchung sicher verhindert.

Ein Auswechseln der kryoskopisch verbundenen Teile ohne Zerstörung der Emailschicht wird ermöglicht und somit eine Reparatur von Einzelbauteilen durch das gewählte Übermaß und die Ausbildung de Form des Rohrendes emailtechnisch realisierbar.

Im folgenden wird anhand der Zeichnung ein Ausführungsbeispiel der Erfindung im einzelnen beschrieben. Es zeigen:
- **Figur 1**: einen Schnitt durch einen Wärmetauscher senkrecht zu einer Wandung, durch die die Leitungen hindurchführen;
- **Figur 2**: eine Ansicht, teilweise weggebrochen, von der Kammer auf den Rohrboden;
- **Figur 3**: eine schematische Darstellung einer Ausführungsform einer Leitung;
- **Figur 4**: einen Schnitt durch einen Abschnitt einer Leitung während des Herstellungsverfahrens;
- **Figur 5**: die Darstellung aus Figur 4 nach dem nächsten Herstellungsschritt;
- **Figur 6**: die Darstellung aus Figur 5 nach dem nächsten Herstellungsschritt;
- **Figur 7**: eine Einzelheit aus Figur 4; und
- **Figur 8**: eine Einzelheit aus Figur 6.

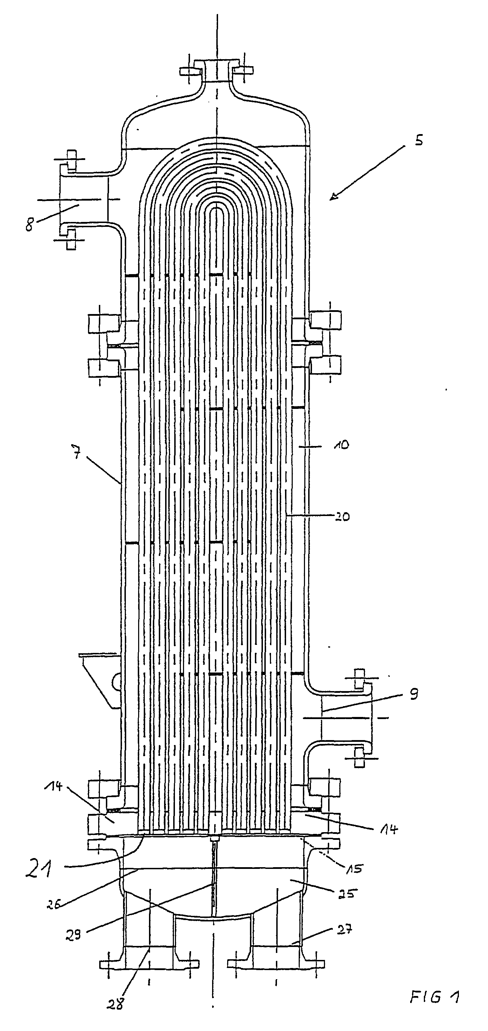

Ein in **Figur 1** schematisch dargestellter Wärmetauscher weist einen zylinderförmigen Behälter 5 mit einer äußeren Wandung 7 und einem inneren ersten Behälterbereich 10 auf. In dem Behälterbereich 10 befindet sich ein aggressives Medium, das dort reagiert oder gelagert wird und definiert gekühlt oder gegebenenfalls auch erhitzt werden soll. Das Medium kann ein Gas oder eine Flüssigkeit sein; die eigentliche Reaktion kann auch außerhalb des Behälters stattfinden, so daß das Medium nur zum Zwecke des Wärmetausches in den Behälter 5 geführt wird. Das aggressive Medium wird durch einen Stutzen 8 in den Behälterbereich 10 hinein - und durch einen zweiten Stutzen 9 wieder herausgeführt.

Neben den Stutzen 8 und 9 ist insbesondere auf einen Rohrboden 14 hinzuweisen. Dieser schließt eine Seitenfläche des langgestreckten zylindrischen ersten Behälterbereichs 10 ab und ist mit den übrigen Behälterwandungen lösbar verbunden. Diese Verbindung ist allerdings hochdicht und geschlossen.

Durch den Boden 14 verläuft eine Vielzahl von Öffnungen 15. Der Boden 14 besteht aus einem emaillierten Metall, unter Umständen auch aus einem relativ korrosionsfesten Material wie Hastelloy.

Im Inneren des Behälterbereichs 10 befindet sich eine Vielzahl von rohrförmigen Leitungen 20. Diese Leitungen 20 besitzen Endabschnitte 21 und erstrecken sich durch den Rohrboden 14 bzw. die darin befindlichen Öffnungen 15 und führen zu einer Kammer 25 bzw. 26. Diese Verbindung bildet den zweiten Behälterbereich für ein zweites Medium, das im Regelfall nicht aggressiv ist und häufig Wasser ist oder zu einem hohen Prozentsatz aus Wasser besteht. Dieses zweite Medium dient der Abfuhr oder Zufuhr von Wärme. Zwischen den beiden Behälterbereichen besteht also möglichst intensiver Wärmeaustausch, aber kein physischer Kontakt oder gar Austausch.

Das zweite Medium wird über eine Zufuhr 27 der Kammer 25 zugeführt. Von der Kammer 25 aus strömt es in die Endabschnitte 21 der Leitungen 20 und durch die Öffnungen 15 im Rohrboden 14. Durch die Leitungen 20 gelangt es über den langen geraden Abschnitt (in der Figur 1 aufwärts dargestellt) oben in den Bogen und wiederum in einem weiteren langen geraden Abschnitt nach unten, erneut durch Öffnungen 15 im Rohrboden 14 zurück in die zweite Kammer 26. Aus der Kammer 26 strömt das zweite Medium dann über einen Auslauf 28 hinaus.

Die Kammern 25 und 26 sind dabei durch eine Trennwand 29 getrennt; insgesamt stellen diese beiden Bereiche gemeinsam ein 2-Kammersystem dar. Der Inhalt der beiden Bereiche 25 bzw. 26 der Kammern unterscheidet sich durch die ihm innewohnende Temperatur. Da es sich um einen Wärmetauscher insgesamt handelt, wird ja von dem zweiten Medium während des Durchströmens durch die Leitung 20 Temperatur vom ersten Medium im Behälter 5 aufgenommen (bzw. abgegeben), so daß es in der Kammer 26 mit einer höheren (bzw. tieferen) Temperatur ankommt, als es sie in dem Ausgangsbereich der Kammer 25 noch besessen hatte.

Das zweite Medium kann üblicherweise ständig wieder verwendet werden, nachdem es abgekühlt bzw. erneut auf entsprechende gewünschte Temperaturen gebracht ist. Da es sich im Regelfall um gewöhnliches Wasser oder eine jedenfalls stark wasserhaltige Substanz handelt, ist die Beschäftigung mit diesem Medium verhältnismäßig unkritisch.

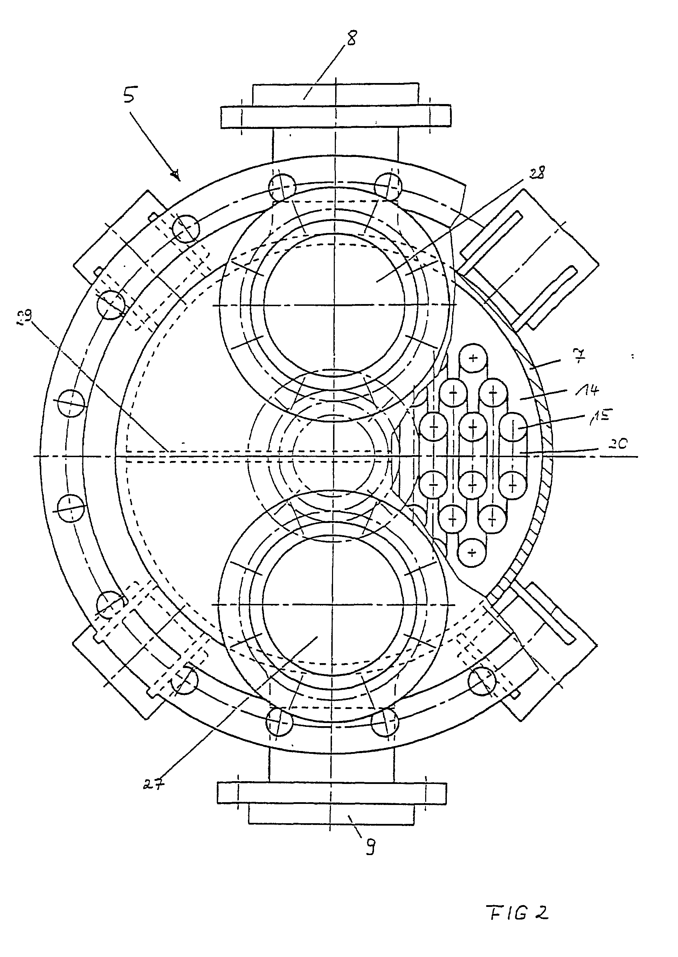

**Figur 2** zeigt eine Ansicht gesehen von der Kammer 25, 26 aus in Richtung auf die Behälterwandung 14. Gut im Schnitt zu erkennen sind daher die Zufuhr 27 zur Kammer 25 und der Ablauf 28 aus der Kammer 26 sowie geschnitten die Trennwand 29 zwischen den beiden Bereichen der Kammer. In dem in Figur 2 rechts befindlichen, teilweise weggebrochenen Abschnitt sind die Öffnungen 15 gut zu erkennen, durch die die Leitungen 20 hindurchführen. Von den Leitungen 20 ist im Grunde nur der Innenbereich der Krümmung am oberen Ende aus Figur 1 zu erkennen.

Dargestellt sind auch die Stutzen 8 und 9, die den ersten Behälterbereich 10 mit dem ersten Medium versorgen bzw. dieses daraus abführen.

Die Leitungen 20 sind - wie die Figuren 1 und 2-in Zusammenschau ergeben-jeweils bogenförmig übereinander angeordnet, damit der erste Behälterbereich 10 von einer möglichst großen Zahl derartiger Leitungen 20 durchzogen werden kann und die Funktion des Wärmetauschers besonders effektiv und mit vielen Wandkontaktbereichen vollzogen werden kann und somit bei minimalem Masseneinsatz eine große Wärmeaustauschfläche erreicht wird, was einen hohen Wirkungsgrad zur Folge hat.

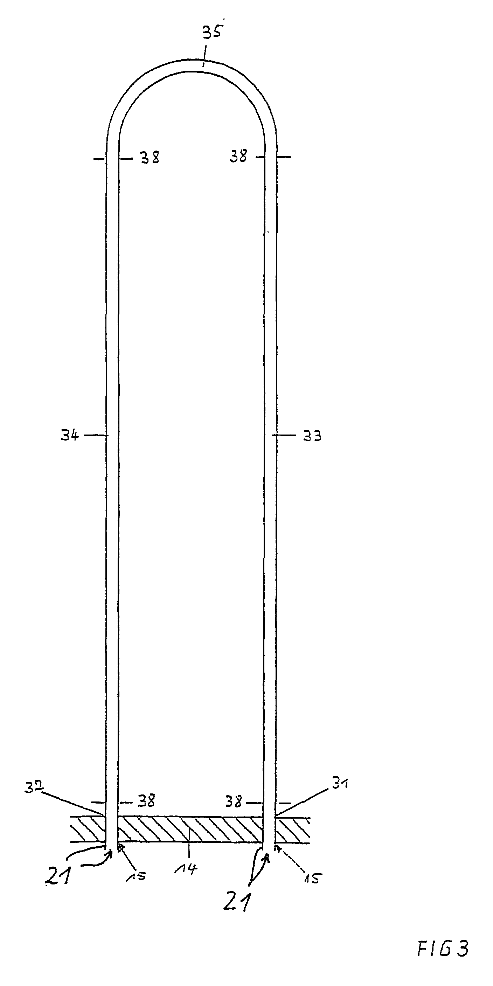

In **Figur 3** ist eine der Leitungen 20 im einzelnen dargestellt. Zu erkennen ist zunächst unten wiederum der Rohrboden 14, durch den die Leitung 20 insgesamt an zwei Punkten hindurchtritt, nämlich durch die Öffnungen 15.

Die Leitung selbst besteht hier in dem dargestellten Ausführungsbeispiel aus fünf Abschnitten, was die Herstellung besonders zweckmäßig gestaltet. So sind zunächst zwei kurze, gerade Abschnitte 31 und 32 vorgesehen, die genau durch die Öffnungen 15 in dem Rohrboden 14 hindurchgehen und präzise parallel zueinander stehen. Diese kurzen, geraden Abschnitte 31, 32 bilden ausgangsseitig auch die Endabschnitte 21. An diese kurzen, geraden Abschnitte 31, 32 schließen sich jeweils ein langer, gerader Abschnitt 33 bzw. 34 an. Diese langen, geraden Abschnitte stehen im wesentlichen auch parallel zueinander, wobei diese Parallelität weniger kritisch ist. Diese langen Abschnitte können mit einem geeigneten Verfahren, insbesondere mit einem Endlosverfahren gemäß der DE 195 03 999 A1 hergestellt und emailliert sein. Die oberen Enden der langen, geraden Abschnitte 33, 34 sind miteinander durch einen verbindenden Bogenabschnitt 35 verbunden.

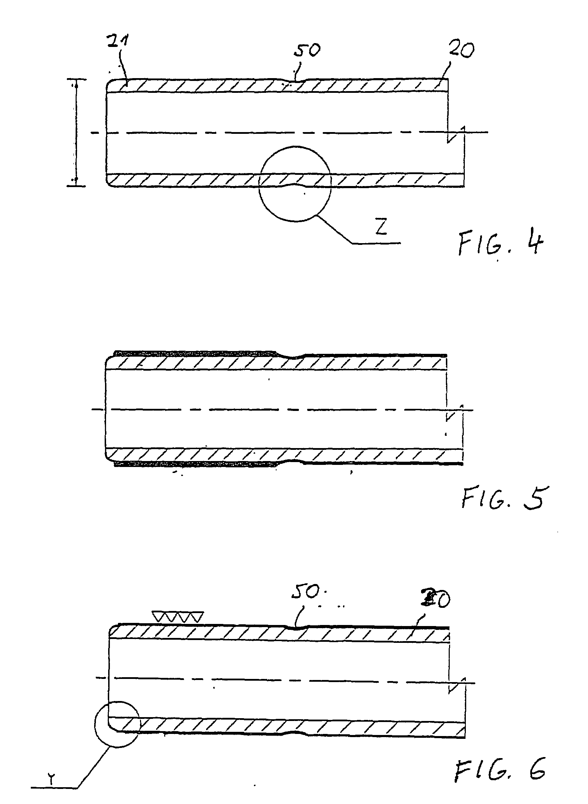

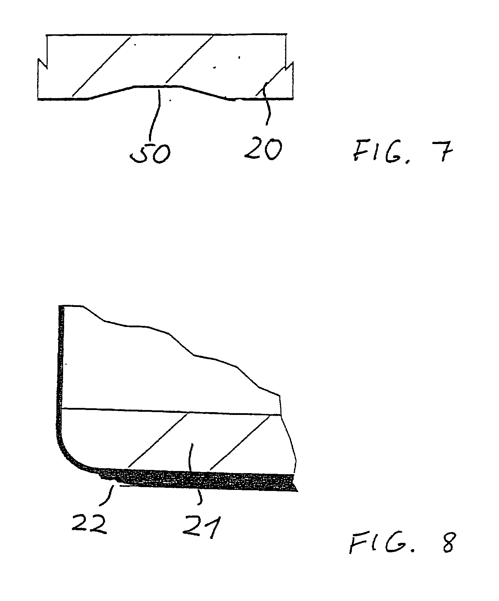

Die **Figuren 4, 5 und 6** zeigen jeweils einen Endabschnitt 21 einer der Leitungen 20 in verschiedenen Stadien seiner Herstellung. Die Leitung 20, die sich in den Figuren 4 bis 6 jeweils nach rechts in erheblicher Länge fortsetzt, endet links mit dem Endabschnitt 21. An dieser Stelle tritt das Medium, also üblicherweise eine Flüssigkeit oder ein Gas, in die Leitung ein bzw. aus. Der Bereich in der linken Hälfte der Figur 4 ist derjenige, der später in dem sogenannten Rohrboden 14 angeordnet wird. Deutlich zu erkennen ist eine Sicke 50 in einem Abstand vom Ende der Leitung 20, der so groß ist, das die Sicke 50 im eingebauten Zustand der Leitung 20 bereits außerhalb des Rohrbodens 14 angeordnet sein wird. Die Sicke ist vergrößert in Figur 7 dargestellt. Die Sicke 50 besitzt einen Radius von etwa 500 µm bis 800 µm.

**Figur 5** zeigt einen nächsten Verfahrensschritt. Hier wird die Emaillierung auf die Leitung 20 aufgebracht. Die Emaillierung wird im Bereich des Endabschnittes 21 dicker als an sich erforderlich oder gewünscht aufgebracht. Erforderlich und gewünscht ist eine Dicke von 500 µm bis 1000 µm. Auch die Sicke 50 wird bei diesem Schritt zugleich mit emailliert.

In der **Figur 6** ist ein dritter Verfahrensschritt zur weiteren Behandlung der in Figur 5 dargestellten Leitung 20 abgebildet. Zu erkennen ist, das jetzt der in Figur 5 noch als zu dick dargestellte emaillierte Bereich wieder abgetragen bzw. abgeschliffen wird. Er wird in diesem Verfahrensschritt fein bearbeitet, um anschließend die vollständig dichte und den Heliumlecktest bestehende Abdichtung innerhalb der Öffnung 15 gewährleisten zu können.

Um auch ein sicheres Einfügen des Endabschnittes 21 der Leitung 20 in die Öffnung 15 sicherzustellen, ist die Emaillierung darüber hinaus benachbart zum Ende des Endabschnittes 21 mit einer Fase 22 versehen.

Insbesondere die Konzeption mit der Sicke 50 führt zu einem wesentlichen Vorteil. Bei thermisch oder auch mechanisch bedingten Bewegungen und Spannungen innerhalb der Leitungen 20 in dem Wärmetauscher entsteht so eine künstliche Vergrößerung der Gesamtlänge der Emaillierschicht auf der Leitung. Das bedeutet, daß die Spannungen, die entstehen, sich über eine größere Länge abtragen können. Nimmt man gedanklich eine Biegung der Rohrleitung, so wird dies ohne weiteres klar: Die Sicke nimmt die durch die Biegung auftretenden Spannungen zu einem erheblichen Teil auf. Der Effekt ist der, daß die Emailschicht nicht abplatzt, wozu sonst eine nicht unerhebliche Gefahr bestünde.

In der Praxis werden es weniger mechanische Biegespannungen sein, als vielmehr durch die erheblichen Temperaturdifferenzen zwischen den verschiedenen Bereichen der Leitung auftretende innere Spannungen, die aber den gleichen Effekt hervorrufen und durchaus auch zur Verbiegungen der Leitung führen können, mit entsprechender Neigung der Emaillierung zum Abplatzen. Auch hier wirkt die Sicke automatisch dagegen.

Bei der weiteren Betrachtung der Figur 3 können diese Vorteile dann direkt integriert werden.

Bei der Herstellung der Leitung 20 insgesamt können zunächst die beiden langen, geraden Abschnitte 33, 34 hergestellt und emailliert und dann mit dem Bogenabschnitt 35 über zwei Schweißnähte 38 verbunden werden. Es entsteht dadurch schon der größte Teil der gesamten Leitung 20. Jetzt wird in einer präzisen Ausrichtmaschine dafür gesorgt, daß an die dann freien beiden Enden der langen, geraden Abschnitte 33, 34 die beiden kurzen, geraden, ebenfalls schon emaillierten Abschnitte 31 und 32 so angeschweißt werden, daß diese zueinander exakt parallel sind und je einen exakten Abstand zueinander aufweisen. Es entstehen so wiederum zwei Schweißnähte 38.

In einer anderen Alternative wird die Leitung 20 aus einem komplett emaillierten U-Rohr hergestellt. Bei Einsatz kompletter U-Rrohre entfallen die Schweißnähte gänzlich.

Jetzt in dieser Phase werden alle vier entstandenen Schweißnähte 38 zwischen den fünf einzelnen Abschnitten der Leitung 20 nachemailliert. Nun wird die fertige Leitung 20 in die Öffnungen 15 des Rohrbodens 14 eingesetzt. Hierzu wird die Leitung kryoskopisch unterkühlt und paßt so problemlos in die vorbereiteten, ihrerseits beispielsweise emaillierten Öffnungen 15 des Rohrbodens 14. Nach Erwärmung der Leitung 20 entsteht ein exakter Paßsitz.

Bei Verwendung kompletter U-Rohre erfolgt die Bearbeitung der Enden direkt.

Zum Verständnis der Problematik sei darauf hingewiesen, daß in Figur 3 ja nur eine Leitung dargestellt ist. In der Praxis entstehen, wie in den Figuren 1 und 2 zu ersehen ist, hier eine enorme Vielzahl von dicht benachbarten Öffnungen in den Rohrboden 14, in die jeweils Leitungen sich gegenseitig abdeckend eingesetzt werden müssen. Eine Emaillierung an genau dieser Stelle während oder nach dem Einsetzen der Leitungen 20 ist nicht möglich.

### Bezugszeichenliste

- 5: Behälter
- 7: Wandung von 5
- 8: Stutzen
- 9: Stutzen
- 10: erster Behälterbereich
- 14: Rohrboden
- 15: Öffnungen in 14
- 20: Leitung
- 25: Kammer
- 26: Kammer
- 27: Zufuhr zu 25
- 28: Auslauf aus 26
- 29: Trennwand
- 31: kurzer, gerader Abschnitt
- 32: kurzer, gerader Abschnitt
- 33: langer, gerader Abschnitt
- 34: langer, gerader Abschnitt
- 35: verbindender Bogenabschnitt
- 38: Schweißnähte

## Patentansprüche

1. Wärmetauscher mit einem ersten Behälterbereich (10) für ein zu kühlendes oder zu erwärmendes insbesondere chemisch aggressives Medium, wobei in diesem ersten Behälterbereich (10) eine Anzahl rohrförmiger aus einem emaillierten Metall bestehender Leitungen (20) verlaufen, deren innere Hohlräume einen zweiten Behälterbereich für ein zweites, kühlendes und/oder erhitzendes Medium bilden und welche Leitungen (20) durch Öffnungen (15) in einem Rohrboden (14) aus dem ersten Behälterbereich (10) heraus und in eine oder mehrere Kammern (25, 26) mit dem zweiten, kühlenden oder erhitzenden Medium führen,
**dadurch gekennzeichnet,**
**daß** die Leitungen (20) innerhalb des ersten Behälterbereiches (10) in ihren äußeren Wandungen Sicken (50) aufweisen und
**daß** die emaillierten Außenflächen der Leitungen (20) und die Innenflächen der Öffnungen (15) dichtungsfrei und leckfrei im Preßsitz aufeinanderliegen.

2. Wärmetauscher nach Anspruch 1,
**dadurch gekennzeichnet,**
**daß** die Sicken (50) in den Wandungen der Leitungen (20) jeweils knapp innerhalb der Öffnungen (15) in dem Rohrboden (14) vorgesehen sind.

3. Wärmetauscher nach Anspruch 1 oder Anspruch 2,
**dadurch gekennzeichnet,**
**daß** der Krümmungsradius der Sicken (50) zwischen 300 µm und 800 µm beträgt.

4. Wärmetauscher nach einem der vorstehenden Ansprüche,
**dadurch gekennzeichnet,**
**daß** die Leitungen (20) mit Endabschnitten (21) versehen sind, benachbart zu deren Enden die Emaillierung in einer Fase (22) endet.

5. Wärmetauscher nach einem der vorstehenden Ansprüche,
**dadurch gekennzeichnet,**
**daß** es sich um einen durch kryoskopische Schrumpfung erzeugten Preßsitz handelt.

6. Wärmetauscher nach einem der vorstehenden Ansprüche,
**dadurch gekennzeichnet,**
**daß** jede der Leitungen (20) durch eine der Öffnungen (15) in den ersten Behälterbereich (10) hinein und eine der anderen Öffnungen (15) in dem gleichen Rohrboden (14) wieder aus dem Behälterbereich (10) herausführt.

7. Wärmetauscher nach Anspruch 6,
**dadurch gekennzeichnet,**
**daß** jede der Leitungen (20) aus mindestens zwei parallelen, nicht gebogenen Rohrabschnitten ( 31, 32, 33, 34) und einem dritten eine Biegung von 180° durchführenden und die nicht gebogenen Rohrabschnitte verbindenden Bogenabschnitt (35) besteht.

8. Wärmetauscher nach einem der vorstehenden Ansprüche,
**dadurch gekennzeichnet,**
**daß** die Leitungen (20) mindestens einen relativ kurzen, geraden Rohrabschnitt (31) im Bereich der Durchführung durch die Öffnungen (15) des Rohrbodens (14) und einem an diesen relativ kurzen Rohrabschnitt (31) anschließenden, mit diesem Rohrabschnitt durch Schweißung verbundenen weiteren Rohrabschnitt (33) aufweist, wobei der Verbindungsbereich anschließend lokal erneut emailliert ist.

9. Wärmetauscher nach Anspruch 7 und 8,
**dadurch gekennzeichnet,**
**daß** die Leitungen (20) jeweils zwei relativ kurze, gerade Rohrabschnitte (31, 32) im Bereich der Durchführung durch zwei Öffnungen (15) des Rohrbodens (14) und jeweils daran anschließende, mit den kurzen, geraden Rohrabschnitten (31,32) durch Schweißung verbundene lange, gerade Rohrabschnitte (33,34) aufweist, sowie einen fünften, eine Biegung von 180° durchführenden und die langen geraden Rohrabschnitte (33,34) verbindenden Bogenabschnitt (35) aufweist, wobei die vier Verbindungsbereiche anschließend lokal erneut emailliert werden.

10. Wärmetauscher nach einem der vorhergehenden Ansprüche,
**dadurch gekennzeichnet,**
**daß** die Emailleschicht auf den Leitungen (20) nur eine Dicke von 500 bis 1.000 µm außerhalb des Bereiches in oder benachbart zu den Öffnungen (15) besitzt.

11. Wärmetauscher nach einem der vorhergehenden Ansprüche,
**dadurch gekennzeichnet,**
**daß** auch der Rohrboden (14) aus emaillierten Metall besteht, insbesondere in den Innenflächen der Öffnungen (15).

12. Verfahren zur Herstellung eines Wärmetauschers nach einem der vorstehenden Ansprüche,
**bei dem** die Leitungen (20) vor dem Emaillieren und Einsetzen mit Sicken (50) in dem Bereich versehen werden, der nach dem Einsetzen im ersten Behälterbereich (10) angeordnet ist.

13. Verfahren nach Anspruch 12,
**dadurch gekennzeichnet,**
**daß** die Leitungen (20) in ihren Endabschnitten (21) zunächst mit einer Emaillierung mit einer Dicke versehen werden, die größer als die bei der Fertigung angestrebte Dicke ist, und daß diese Dicke anschließend durch Feinbearbeitung wieder abgetragen wird.

14. Verfahren nach Anspruch 13,
**dadurch gekennzeichnet,**
**daß** die Dicke zunächst auf mehr als 800 µm gesteigert und durch Feinbearbeitung auf weniger als 600 µm abgetragen wird.

15. Verfahren nach Anspruch 12 bis 14,
**dadurch gekennzeichnet,**
**daß** die Emaillierung an ihrem Ende gefast wird.

16. Verfahren zur Herstellung eines Wärmetauschers nach einem der Ansprüche 12 bis 15,
**bei dem**
- Leitungen (20) hergestellt werden, indem kurze, gerade Abschnitte (31, 32) vorbereitet und emailliert werden, diese kurzen, geraden Abschnitte (31, 32) über ein oder mehrere Verbindungsabschnitte (33, 34, 35) verbunden und verschweißt und die Verbindungsstellen lokal nachemailliert werden,
- die Leitungen (20) oder zumindest ihre kurzen geraden Abschnitte (31, 32) kryoskopisch unterkühlt und mit ihren kurzen, geraden Abschnitten (31, 32) in die Öffnungen (15) des Rohrbodens (14) eingesetzt werden,
- anschließend durch Erwärmung eine Ausdehnung und dadurch ein Preßsitz der kurzen geraden Abschnitte (31, 32) in den Öffnungen (15) entsteht.

17. Verfahren nach einem der Ansprüche 12 bis 15, **bei dem**
- Leitungen (20) hergestellt werden, indem vollständig emaillierte U-Rohre verwendet werden,
- zumindest die Enden der aus den U-Rohren gebildeten Leitungen (20) kryoskopisch unterkühlt und in die Öffnungen (15) des Rohrbodens (14) eingesetzt werden,
- anschließend durch Erwärmung eine Ausdehnung und dadurch ein Preßsitz der Enden in den Öffnungen (15) entsteht.

## Claims

1. A heat exchanger with a first container region (10) for a medium to be cooled or heated, particularly a chemically aggressive medium, wherein a number of tubular pipes (20) made of an enamelled metal run in this first container region (10), their internal cavities forming a second container region for a second, cooling and/or heating medium, and which pipes (20) lead out of the first container region (10) through openings (15) in a tube base (14) and into one or more chambers (25, 26) with the second, cooling or heating medium,
**characterised in that**
the pipes (20) inside the first container region (10) have swaging (50) in their external walls and **in that**
the enamelled external surfaces of the pipes (20) and the internal surfaces of the openings (15) lie against each other with a press fit, seal-free and leakage-free.

2. The heat exchanger of claim 1,
**characterised in that**
the swaging (50) in the walls of the pipes (20) is in each case provided just inside the opening (15) in the tube base (14).

3. The heat exchanger of claim 1 or claim 2,
**characterised in that**
the radius of curvature of the swaging (50) is between 300 µm and 800 µm.

4. The heat exchanger of one of the preceding claims,
**characterised in that**
the pipes (20) are provided with end sections (21), adjacent the ends of which the enamelling ends in a chamfer (22).

5. The heat exchanger of one of the preceding claims,
**characterised in that**
the press fit is produced by cryoscopic shrinkage.

6. The heat exchanger of any of the preceding claims,
**characterised in that**
each of the pipes (20) leads into the first container region (10) through one of the openings (15) and out of the container region (10) again through one of the other openings (15) in the same tube base (14).

7. The heat exchanger of claim 6,
**characterised in that**
each of the pipes (20) comprises at least two parallel, non-curved tube sections 31, 32, 33, 34 and a third curved section (35) which bends through 180° and connects the non-curved tube sections.

8. The heat exchanger of one of the preceding claims,
**characterised In that**
the pipes (20) have at least one relatively short, straight tube section (31) in the region of the passage through the openings (15) in the tube base (14), and a further tube section (33) which adjoins this relatively short tube section (31) and is joined to this tube section by welding, the joining region then being locally re-enamelled.

9. The heat exchanger of claims 7 and 8,
**characterised in that**
the pipes (20) each have two relatively short, straight tube sections (31, 32) in the region of the passage through two openings (15) in the tube base (14) and, adjoining each of these, long, straight tube sections (33, 34) joined to the short, straight tube sections (31, 32) by welding, and also a fifth, curved section (35) bending through 180° and joining the long, straight tube sections (33, 34), the four joining regions then being locally re-enamelled.

10. The heat exchanger of one of the preceding claims,
**characterised in that**
the enamel layer on the pipes (20) has only a thickness of 500 to 1 000 µm outside the region in or adjacent the openings (15).

11. The heat exchanger of one of the preceding claims,
**characterised in that**
the tube base (14) is also made of enamelled metal, particularly in the internal surfaces of the openings (15).

12. A method of making the heat exchanger of one of the preceding claims,
**wherein** before the pipes (20) are enamelled and inserted they are provided with swaging (50) in the region which is located in the first container region (10) after insertion.

13. The method of claim 12,
**characterised in that**
the end sections (21) of the pipes (20) are first provided with enamelling to a thickness greater than the thickness targeted in production, and that that thickness is then reduced by fine machining.

14. The method of claim 13,
**characterised in that**
the thickness is first increased to more than 800 µm and is reduced to less than 600 µm by fine machining.

15. The method of claims 12 to 14,
**characterised in that**
the enamelling is chamfered at its end.

16. A method of making the heat exchanger of one of claims 12 to 15.
**wherein**
- pipes (20) are produced by preparing and enamelling short, straight sections (31, 32), these short, straight sections (31, 32) are joined and welded by one or more connecting sections (33, 34, 35) and the joints are locally post-enamelled,
- the pipes (20) or at least their short, straight sections (31, 32) are cryoscopically supercooled and inserted by their short, straight sections (31, 32) in the openings (15) of the tube base (14),
- expansion then takes place through heating, and a press fit of the short, straight sections (31, 32) in the openings (15) is thereby obtained.

17. The method of one of claims 12 to 15,
**wherein**
- pipes (20) are produced by using fully enamelled U tubes,
- at least the ends of the pipes (20) formed from the U tubes are cryoscopically supercooled and inserted in the openings (15) of the tube base (14),
- expansion then takes place through heating, and a press fit of the ends in the openings (15) is thereby obtained.

## Revendications

1. Echangeur de chaleur comprenant une première zone réservoir (10) pour un fluide agressif notamment chimiquement à chauffer ou à refroidir, ladite première zone réservoir (10) comprenant un certain nombre de conduites (20) tubulaires constituées de métal émaillé dont les cavités internes forment une deuxième zone réservoir pour un deuxième fluide de chauffage et/ou de refroidissement et lesdites conduites (20) sortant par des ouvertures (15) pratiquées dans une plaque tubulaire (14) de la première zone réservoir (10) pour rentrer dans une ou plusieurs chambres (25, 26) avec le deuxième fluide de chauffage ou de refroidissement, **caractérisé en ce que** les conduites (20) présentent dans la première zone réservoir (10) des moulures (50) situées sur leurs parois externes et **en ce que** les surfaces externes émaillées des conduites (20) et les surfaces internes des ouvertures (15) sont posées l'une contre l'autre sans joint et sans fuite par ajustage serré.

2. Echangeur de chaleur selon la revendication 1, **caractérisé en ce que** les moulures (50) prévues dans les parois des conduites (20) rentrent respectivement à peine à l'intérieur des ouvertures (15) de la plaque tubulaire (14).

3. Echangeur de chaleur selon la revendication 1 ou 2, **caractérisé en ce que** le rayon de courbure des moulures (50) est compris entre 300 µm et 800 µm.

4. Echangeur de chaleur selon l'une des revendications précédentes, **caractérisé en ce que** les conduites (20) sont dotées de sections finales (21) au voisinage desquelles l'émaillage se termine par un chanfrein (22).

5. Echangeur de chaleur selon l'une des revendications précédentes, **caractérisé en ce qu'**il s'agit d'un ajustage serré produit par rétractation cryométrique.

6. Echangeur de chaleur selon l'une des revendications précédentes, **caractérisé en ce que** chacune des conduites (20) rentre par l'une des ouvertures (15) dans la première zone réservoir (10) et ressort à nouveau par une autre des ouvertures (15) de la même plaque tubulaire (14) de la zone réservoir (10).

7. Echangeur de chaleur selon la revendication 6, **caractérisé en ce que** chacune des conduites (20) est constituée d'au moins deux sections de tube (31, 32, 33, 34) parallèles, non coudées et d'une troisième section de coude (35) formant un coude de 180 ° et reliant les sections de tube non coudées.

8. Echangeur de chaleur selon l'une des revendications précédentes, **caractérisé en ce que** les conduites (20) présentent au moins une section de tube (31) relativement courte et droite dans la zone où elles traversent les ouvertures (15) de la plaque tubulaire (14) et une autre section de tube (33) raccordée à cette section de tube (31) relativement courte et reliée à cette section de tube par soudage, la zone de liaison étant ensuite émaillée à nouveau localement.

9. Echangeur de chaleur selon les revendications 7 et 8, **caractérisé en ce que** les conduites (20) présentent respectivement deux sections de tube (31, 32) relativement courtes et droites dans la zone où elles traversent les deux ouvertures (15) de la plaque tubulaire (14) et des sections de tube (33, 34) longues et droites raccordées aux sections de tube (31, 32) courtes et droites et reliées à celles-ci par soudage ainsi qu'une cinquième section de coude (35) formant un coude de 180 ° et reliant les sections de tube (33, 34) longues et droites, les quatre zones de liaison étant ensuite émaillées à nouveau localement.

10. Echangeur de chaleur selon l'une des revendications précédentes, **caractérisé en ce que** la couche d'émail des conduites (20) n'est épaisse que de 500 à 1000 µm à l'extérieur de la zone des ouvertures (15) ou au voisinage de celles-ci.

11. Echangeur de chaleur selon l'une des revendications précédentes, **caractérisé en ce que** la plaque tubulaire (14) est également constituée de métal émaillé, notamment sur les surfaces internes des ouvertures (15).

12. Procédé de fabrication d'un échangeur de chaleur selon l'une des revendications précédentes dans lequel les conduites (20) sont dotées, avant leur émaillage et leur installation, de moulures (50) dans la zone constituant, après l'installation, la première zone réservoir (10) .

13. Procédé selon la revendication 12, **caractérisé en ce que** les conduites (20) sont tout d'abord revêtues au niveau de leurs sections finales (21) d'un émaillage d'une épaisseur supérieure à l'épaisseur visée lors de la fabrication et **en ce que** cette épaisseur est ensuite réduite par usinage fin.

14. Procédé selon la revendication 13, **caractérisé en ce que** l'épaisseur est tout d'abord portée à plus de 800 µm et ramenée par usinage fin à moins de 600 µm.

15. Procédé selon les revendications 12 à 14, **caractérisé en ce que** l'émaillage est chanfreiné à son extrémité.

16. Procédé de fabrication d'un échangeur de chaleur selon l'une des revendications 12 à 15, dans lequel des conduites (20) sont fabriquées en préparant et en émaillant des sections (31, 32) courtes et droites, ces sections (31, 32) courtes et droites étant reliées et soudées à une ou plusieurs sections de liaison (33, 34, 35) et les points de liaison étant émaillés après coup localement, les conduites (20) ou du moins leurs sections (31, 32) courtes et droites sont sous-refroidies de manière cryométrique et insérées par leurs sections (31, 32) courtes et droites dans les ouvertures (15) de la plaque tubulaire (14) et une dilatation et donc un ajustage serré des sections (31, 32) courtes et droites dans les ouvertures (15) se produisent ensuite par chauffage.

17. Procédé selon l'une des revendications 12 à 15 dans lequel des conduites (20) sont fabriquées en employant des tubes en U complètement émaillés, au moins les extrémités des conduites (20) formées à partir des tubes en U sont sous-refroidies de manière cryométrique et insérées dans les ouvertures (15) de la plaque tubulaire (14), une dilatation et donc un ajustage serré des extrémités dans les ouvertures (15) se produisent ensuite par chauffage.
